# EUROPEAN PATENT APPLICATION

(11) **EP 2 933 992 A1**
(43) Date of publication of application: **21.10.2015**
(21) Application number: 14164662.0
(22) Date of filing: 15.04.2014
(51) Int. Cl.: H04M 19/04

(54) **Method, apparatus and computer program for selecting an audio track**

(71) Applicant: Nokia Technologies OY, 02610 Espoo (FI)
(72) Inventor: Lord, Ben, Reading, RG10 8AJ (GB)
(74) Representative: Nokia Corporation

(57) **Abstract**

A method, apparatus, and computer program is disclosed for selecting an audio track version, comprising:
determining a volume level of an audio output; and
selecting a version of an audio track from a plurality of versions of the audio track in dependence on the determined volume level.

## Description

### TECHNOLOGICAL FIELD

Examples of the present disclosure relate to a method, apparatus, and computer program for selecting an audio track. In particular, though without prejudice to the foregoing, certain examples relate to selecting an audio track for audio output, for example a ringtone, a system sound or an audible alert notification.

### BACKGROUND

The implementation of an audible alert notification of a device (e.g. a ringtone or a system sound) typically involves playing back a single sound file/track selected by a user. The same sound file/track is played back irrespective of the device's volume setting. For example, where the device's volume level setting is increased, the same sound file/track is outputted albeit having a greater amplitude. Such conventional audible alert notification systems are not always optimal.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to at least some but not necessarily all examples of the disclosure there is provided a method comprising: determining a volume level of an audio output; and selecting a version of an audio track from a plurality of versions of the audio track in dependence on the determined volume level.

According to at least some but not necessarily all examples of the disclosure there is provided an apparatus comprising means configured to enable the apparatus at least to perform: determining a volume level of an audio output; and selecting a version of an audio track from a plurality of versions of the audio track in dependence on the determined volume level.

The apparatus may be for selecting an audio track version and may further be configured to output the selected audio track.

The apparatus may be comprised in at least one of: a chipset, a module and a device. The apparatus may be configured for at least one of: audio output; wireless communication; portable handheld use; and mobile telephony.

According to at least some but not necessarily all examples of the disclosure there is provided a computer program that, when performed by at least one processor, causes determining a volume level of an audio output; and selecting a version of an audio track from a plurality of versions of the audio track in dependence on the determined volume level.

According to at least some but not necessarily all examples of the disclosure there is provided an apparatus comprising:
at least one processor; and
at least one memory including computer program code;
the at least one memory and the computer program code configured to, with the at least one processor, cause the apparatus at least to perform: determining a volume level of an audio output; and selecting a version of an audio track from a plurality of versions of the audio track in dependence on the determined volume level.

According to at least some but not necessarily all examples of the disclosure there is provided an apparatus comprising a controller arranged to: determine a volume level of an audio output; and select a version of an audio track from a plurality of versions of the audio track in dependence on the determined volume level.

According to at least some but not necessarily all examples of the disclosure there is provided a chipset comprising processing circuitry configured to determine a volume level of an audio output; and select a version of an audio track from a plurality of versions of the audio track in dependence on the determined volume level.

According to at least some but not necessarily all examples of the disclosure there is provided a module comprising processing circuitry configured to determine a volume level of an audio output; and select a version of an audio track from a plurality of versions of the audio track in dependence on the determined volume level.

According to at least some but not necessarily all examples of the disclosure there is provided a non-transitory computer-readable medium encoded with instructions that, when performed by at least one processor, cause at least the following to be performed: determining a volume level of an audio output; and selecting a version of an audio track from a plurality of versions of the audio track in dependence on the determined volume level.

According to at least some but not necessarily all examples of the disclosure there is provided a portable hand held device comprising means configured to cause at least: determining a volume level of an audio output; and selecting a version of an audio track from a plurality of versions of the audio track in dependence on the determined volume level.

According to at least some but not necessarily all examples of the disclosure there is provided a server or server system comprising means configured to at least: receive a request for an audio track from a requesting apparatus; process the request to determine a plurality of versions of the audio track to be provided responsive to said request; and provide the plurality of versions of the audio track to the requesting apparatus, each of the versions being arranged to be associated with one or more volume levels of the requesting apparatus.

According to at least some but not necessarily all examples of the disclosure, the audio track comprises a musical work and each version of the plurality of versions of the musical work is different to other versions by comprising a recording in which at least one part of the musical work is played with a differing dynamic and/or musical expression from the same part of the musical work other versions.

According to at least some but not necessarily all examples of the disclosure, the musical work comprises a musical composition.

According to at least some but not necessarily all examples of the disclosure, the different dynamic and/or musical expression comprises one or more of the following: a different dynamic manner of playing, musical phrasing, timbre, articulation and tempo.

According to at least some but not necessarily all examples of the disclosure, a different dynamic manner of playing comprises a different note velocity.

According to at least some but not necessarily all examples of the disclosure, the different dynamic manner of playing comprises playing the musical work with a different dynamic of forte (or fortissimo) or piano (or pianissimo).

According to at least some but not necessarily all examples of the disclosure, the different musical phrasing comprises a different manner of playing individual notes in a group of consecutive notes in the musical work or composition.

According to at least some but not necessarily all examples of the disclosure, the different manner of playing individual notes in a group of consecutively played notes comprises a difference in the weighting and shaping of the individual notes relative to the other individual notes in the group of consecutive notes.

According to at least some but not necessarily all examples of the disclosure, the different articulation comprises a different musical performance technique affecting the transition or continuity on a single note or between a plurality of notes or sounds. According to at least some but not necessarily all examples of the disclosure, an articulation comprises one of: staccato, staccatissimo, accent, sforzando, rinforzando, and legato. According to at least some but not necessarily all examples of the disclosure, an articulation may be represented in a musical score by a slur and/or phrase mark. According to at least some but not necessarily all examples of the disclosure there is provided a method, apparatus and computer program configured to cause, at least in part, actions that result in: outputting an audio output of audio content having a note velocity which is dependent upon a determined volume level.

According to at least some but not necessarily all examples of the disclosure there is provided a method, apparatus and computer program configured to cause, at least in part, actions that result in: selecting an audio file for audio output, wherein the audio file is selected in dependence upon a determined volume level.

According to at least some but not necessarily all examples of the disclosure there is provided a method, apparatus and computer program configured to cause, at least in part, actions that result in: receiving a selection of an audio track identifier; determining a plurality of versions of an audio track associated with the audio track identifier; associating the plurality of versions of the audio track with a plurality of volume levels; and storing the association of the audio track versions with the plurality of volume levels.

According to at least some but not necessarily all examples of the disclosure there is provided a method, apparatus and computer program configured to cause, at least in part, actions that result in: receiving an audio track identifier and a volume level; and providing one or more of a plurality of versions of an audio track in dependence on the audio track identifier and the volume level.

The above examples and the accompanying claims may be suitably combined in any manner apparent to one of ordinary skill in the art.

### BRIEF DESCRIPTION OF THE DRAWINGS

For a better understanding of various examples that are useful for understanding the detailed description reference will now be made by way of example only to the accompanying drawings in which:
Figures 1A and 1B schematically illustrate methods according to the present disclosure;
Figures 2A and 2B schematically illustrate yet further methods according to the present disclosure; and
Figure 3 schematically illustrates a method;
Figure 4 schematically illustrates a lookup table;
Figure 5 schematically illustrates a database of audio tracks;
Figure 6 schematically illustrates a further method;
Figure 7 schematically illustrates a yet further method;
Figure 8 schematically illustrates a yet further method;
Figure 9 schematically illustrates a yet further method; and
Figure 10 schematically illustrates an apparatus.

### DETAILED DESCRIPTION

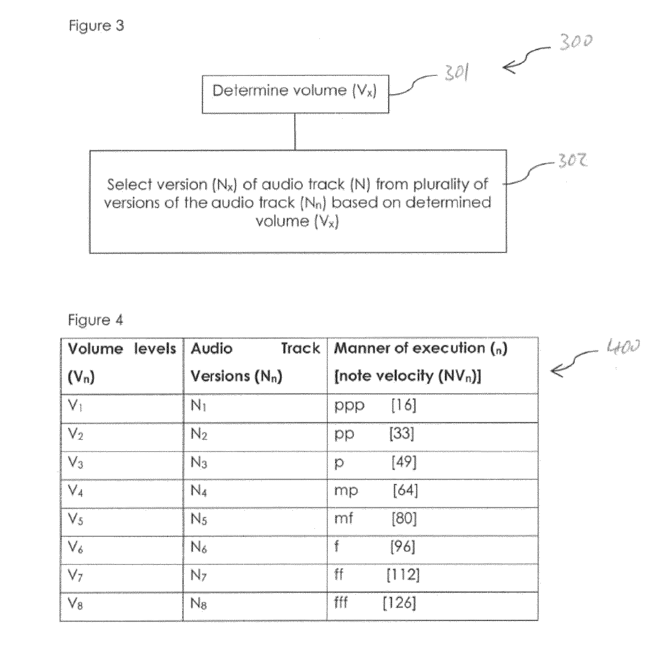

The Figures, for example with reference to Figure 3, schematically illustrate a method (300) comprising causing, at least in part, actions that result in:
determining (301) a volume level (Vₓ) of an audio output;
selecting (302) version (Nₓ) of an audio track (N) from a plurality of versions of the audio track (Nₙ) in dependence on the determined volume level (Vₓ).

In certain examples, the audio track (N) may comprise an audio file representing at least one note and the plurality of versions of the audio track (Nₙ) may correspond to a plurality of audio files each representing the same at least one note but played in a different manner of execution.

The plurality of versions of the audio track (Nₙ) may correspond to recordings of the same at least one note (N) played with a particular manner of execution (ₙ), or the audio tracks (Nₙ) may be synthesised representations of the same at least one note (N) played with a particular manner of execution (ₙ). I.e. the audio tracks may represent different versions of the same at least one note/audio content (N).

In certain examples, the manner of execution (ₙ) of the at least one note (N) may relate to a dynamic aspect of the execution of the at least one note such as how hard or softly the at least one note is performed, or how fast or slowly the at least one note is performed. For example the at least one note could have any of the following manners of execution (ₙ), namely the at least one note being executed having one of the following dynamic characteristics:

| | | |
|---|---|---|
| ppp | Pianississimo | Extremely soft |
| pp | Pianissimo | Very soft |
| p | Piano | Soft |
| mp | Mezzo piano | Half as soft as piano |
| mf | Mezzo forte | Half as loud as forte |
| f | Forte | Loud |
| ff | Fortissimo | Very loud |
| fff | Fortississimo | Extremely loud |

Certain musical instruments are velocity sensitive in that the speed of actuation of a note (i.e. speed of depressing a key of a piano or plucking a string of a guitar) or how hard the note is played affects not only the volume of the note but also the tone of the note. The above dynamic characteristics relating to the execution of a note can be equated to a note velocity as shown below.

| Dynamic characteristic | Note velocity* |
|---|---|
| ppp | 16 |
| pp | 33 |
| p | 49 |
| mp | 64 |
| mf | 80 |
| f | 96 |
| ff | 112 |
| fff | 126 |

| | |
|---|---|
| * Note velocity relates to a representation of how hard a note is played. The note velocity values above correspond to MIDI measurements representative of the speed that a key travels from its rest position to being completely depressed, with 127, the largest value in a 7-bit number, meaning as loud as possible. | |

In one particular example implementation of the present disclosure, one of a plurality of versions of a ringtone is selected for audio output, where each version of the ringtone corresponds to its notes being performed with a particular manner or execution (e.g. different note velocities for each version). Moreover, the selection of the ringtone version is dependent upon a current audio output volume level. Advantageously, such an example provides a volume responsive selection of a ringtone having a note velocity which is dependent upon the volume.

Certain implementation examples beneficially provide the ability to select an audio track having a 'hardness' of notes which is sympathetic to the current volume level. Examples provide an improved and more natural sounding increase in volume of audio output by enabling the selection of a version of the audio track which is optimised for audio output at a particular volume level. For example, when the volume setting is at level 1 of 8, a version of the audio track could be selected having a low note velocity value, i.e. all the notes of the audio track having a ppp dynamic characteristic, whereas when the audio track volume setting is at level 8 of 8, a version of the same audio track could be selected but having a high note velocity value, i.e. all of the notes of the audio track having a fff dynamic characteristic. This can give rise to a more intuitive and natural sounding louder audio output having not only a greater volume/intensity but also an enhanced dynamic audio characteristic more appropriate to the louder audio output.

The inventor of the present application has appreciated that the selection of at least one note having a note velocity which is selected in accordance with the audio output volume, i.e. performing the note harder for louder volumes, provides a more natural sounding increase in volume. This can give rise to an emotional response from the user, namely imparting a greater sense of attentiveness/urgency to the user upon hearing the harder note.

More generally, the output audio volume setting of an apparatus according to some, but not necessarily all, embodiments of the disclosure, may be perceived to apply to the audio output of a replayed recording of a musical work at least one additional musical characteristic, for example, an additional dynamic and/or musical expression, which modifies the dynamic and/or musical expression of the originally recorded version of the musical recording. According to some, but not necessarily all embodiments of the disclosure, selecting an appropriate original recording version for a particular volume and/or range of volumes of an apparatus, improves the perceived audio quality output when the musical work is played by the apparatus at the particular volume or range of volumes. The above discussion of certain examples of implementations of the present disclosure refers to differing versions of the audio track corresponding to different note velocity/hardness. However, it is to be appreciated that the plurality of versions of the audio track could relate to a different adjustable attribute other than note velocity/hardness. For instance, the audio track could have an adjustable parameter and the plurality of versions of the audio track could correspond to versions of the audio track each having a different value of the adjustable parameter. The attribute/parameter could relate to something which is audibly detectable, i.e. upon playback. For example, an audibly detectable parameter that differs for each audio track version may relate to modulation (e.g. amplitude or frequency modulation) of the audio content of the audio track.

For example, each version of the audio track may comprises a recording which includes at least one part of a musical work being played with one or more different dynamic and/or musical expressions from the way the same part of the musical work is played in at least one other version of the audio track. Examples of different dynamic and/or musical expressions include one or more of: a different dynamic manner of playing, musical phrasing, timbre, articulation and tempo. An example of a different dynamic manner of playing comprises a different note velocity. Another example of different dynamic manners of playing may comprise playing part or all of a musical work with one or more different dynamics, such as a range of forte (or fortissimo) or piano (or pianissimo) which differs from the dynamics of the other versions. An example of different musical phrasing comprises a different manner of playing individual notes in a group of consecutive notes in a musical work or composition. An example of a different manner of playing individual notes in a group of consecutively played notes comprises a difference in the weighting and shaping of the individual notes relative to the other individual notes in the group of consecutive notes. An example of a different articulation comprises a different musical performance technique affecting the transition or continuity on a single note or between a plurality of notes or sounds. A differing articulation might accordingly might comprise the entire or part of the musical work being played with a differing staccato, staccatissimo, accent, sforzando, rinforzando, or legato expression. An articulation may be represented in a musical score by a slur and/or phrase mark.

Examples of the invention may take the form of a method, an apparatus or a computer program. Accordingly, examples may be implemented in hardware, software or a combination of hardware and software.

Examples of the invention are described using flowchart illustrations and schematic block diagrams. It will be understood that each block (of the flowchart illustrations and block diagrams), and combinations of blocks, can be implemented by computer program instructions of a computer program. These program instructions may be provided to one or more processor(s), processing circuitry or controller(s) such that the instructions which are executed by the processor(s), processing circuitry or controller(s) create means for causing implementing of the functions specified in the block or blocks. The computer program instructions may be executed by the processor(s) to cause a series of operational steps to be performed by the processor(s) to produce a computer implemented process such that the instructions which are executed by the processor(s) provide steps for implementing the functions specified in the block or blocks.

Accordingly, the blocks support: combinations of means for performing the specified functions; combinations of steps for performing the specified functions; and computer program instructions/algorithms for performing the specified functions. It will also be understood that each block, and combinations of blocks, can be implemented by special purpose hardware-based systems which perform the specified functions or steps, or combinations of special purpose hardware and computer program instructions.

An example of a method will now be described with reference to the Figures. Similar reference numerals are used in the Figures to designate similar features. For clarity, all reference numerals are not necessarily displayed in all figures.

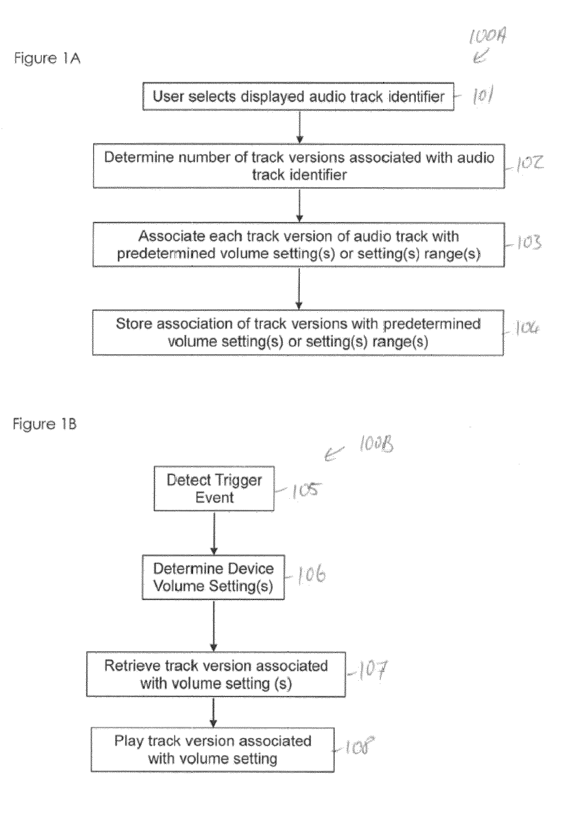

Figures 1A and 1B schematically illustrate flow charts of methods 100A and 100B of an implementation according to the present disclosure. Method 100A relates to associating audio track versions of an audio track with predetermined volume settings. Method 100B relates to the use of the association in determining which audio track version to playback.

In block 101 of method 100A, a user selects a displayed audio track identifier. The audio track identifier may be displayed on a device which is configured, e.g. provided with a user interface, to enable user selection of the displayed audio track identifier.

In block 102, a number of audio track versions of an audio track associated with the selected audio track identifier are determined. The number of differing track versions of the audio track associated with the selected audio track identifier may be processed and generated in advance, e.g. prior to any eventual playback of the audio track versions. Such processing and generating of the number of differing track versions may be performed by a separate/remote device, following which the differing track versions could then be accessible/downloaded by the device.

In block 103, each audio track version of the audio track is associated with one or more predetermined volume setting(s) or setting(s) range(s). The predetermined volume setting may correspond to a current audio output volume level of the device. Each audio track version could be associated with a group of settings/group of setting ranges. In block 104, the association of each audio track version with the predetermined volume setting or setting range is stored. This could be stored locally to the device in a memory of the device or stored remotely in a separate device such as a server.

In block 105 of method 100B, a trigger event is detected, e.g. detection of an incoming call or other event to prompt an audio output. In block 106, a volume setting of the device is determined, such as a current audio output volume level of the device. In block 107 an audio track version associated with the determined volume setting is retrieved. In one embodiment, the various versions of audio tracks and their associations with corresponding volume settings are locally stored in the device's memory. In another embodiment, the various versions of audio tracks and their associations with corresponding volume settings are stored in a remote server, whereby the various audio track versions are accessible to the device. In this case, the retrieval of block 107 may involve the remote server receiving the determined volume setting from the device and the server determining an audio track version associated with the received volume setting based on the stored associations. The server may then send the associated audio track version to the device thereby ensuring that the correct/appropriate version of the audio track is provided to the device given the device's current volume setting.

In one embodiment, a server or server system is provided comprising means configured to at least: receive a request for an audio track from a requesting apparatus; process the request to determine a plurality of versions of the audio track to be provided responsive to said request; and provide the plurality of versions of the audio track to the requesting apparatus, each of the versions being arranged to be associated with one or more volume levels of the requesting apparatus.

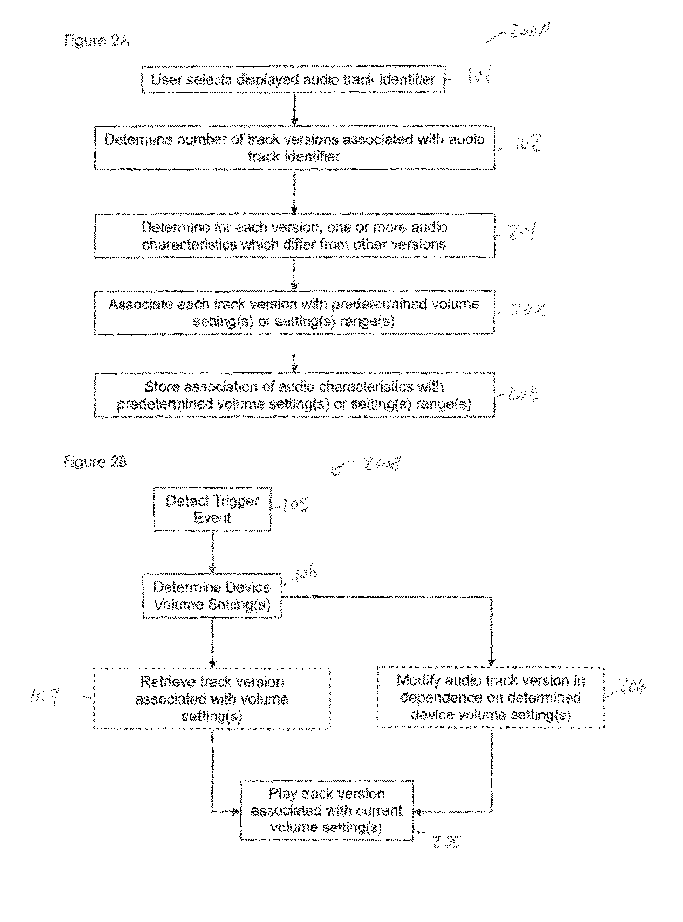

Figures 2A and 2B schematically illustrate further flow charts of methods 200A and 200B according to another implementation according to the present disclosure. Blocks 101 and 102 of Figure 2A correspond to blocks 101 and 102 of Figure 1A relating to the selection of an audio track identifier and determination of audio track versions associated with the audio track identifier. In block 201, for each audio track version, one or more audio characteristics, which vary between the versions, are determined. The differing audio characteristics of each version may correspond to differing playback versions.

In block 202, each audio track version is associated with a predetermined volume setting(s)/range(s). Each audio track version could be associated with a group of settings/group of setting ranges. The audio characteristics/playback version characteristics are associated with the one or more predetermined volume setting(s) or setting(s) range(s). In block 203, the associations between the audio characteristics/playback version characteristics and the one or more predetermined volume setting(s) or setting(s) range(s) are stored.

Blocks 105 and 106 of Figure 2B correspond to blocks 105 and 106 of Figure 1B relating to the detection of a triggering event and determining of one or more volume settings. Following the block 106, the method branches out to block 107 and block 204. In block 107 an audio track version associated with the determined volume setting may be retrieved. In block 204, a version of an audio track, e.g. a primary version of the audio track, is modified in dependence on the determined volume setting. Following blocks 107 and/or 204, in block 205, the retrieved and/or modified audio track version is played back at a volume setting in accordance with the determined volume setting.

In the method of Figures 2A and 2B, specific different audio characteristics/playback versions for each volume setting may be specified so that the most appropriate audio track version may be used when the device has a particular volume setting. The audio characteristics may be specified or configured by a user of the device, or a provider of multiple versions of audio tracks (e.g. ringtone distributer). The characteristics may relate to an aspect of playback volume, i.e. not just overall total volume of the device but bass frequency, treble frequency volume and/or a combination of settings. This makes it possible to modify an audio track version prior to playback/audio output depending of the device's volume setting. For example, an audio distortion (modification of the audio track's frequency output) could be adjusted depending on the current volume level.

Figure 3 schematically illustrates a flow chart of a method 300 according to an example of the invention. In block 301 a volume level Vₓ of an audio output is determined. The volume level may, for example, relate to an overarching system volume level of an audio output device, or the volume level may relate to a sub-setting of volumes, e.g. a volume level for a particular audio output, e.g. audio alerts, audio notifications, audio warnings, system sounds or ringtones. The volume level may correspond to a particular volume value/setting, e.g. 3 out of a maximum of 30, or may correspond to a range of volume values/settings, e.g. 1-5 out of a maximum of 30.

In block 302 a version Nₓ of an audio track N is selected from a plurality of versions Nₙ of the audio track N in dependence on the determined volume level Vₓ. Each of the plurality of versions of the audio track is representative of at least one note N played in a particular manner of execution ₙ. Moreover, each of the plurality of versions of the audio track represents the same at least one note but played in a different manner of execution. In effect the plurality of audio tracks comprise a plurality of versions of the same at least one note, wherein the versions differ in the manner of execution of the at least one note.

The manner of execution ₙ of the at least one note N may relate to at least one of:
a dynamic aspect of the execution of the at least one note;
how hard or softly the at least one note is performed (e.g. ppp, pp, p, mp, mf, f, ff, fff);
how fast or slowly the at least one note is performed;
a note velocity of the at least one note; and
a stylistic aspect of the manner of execution of the at least one note (e.g. staccato, legato).

A manner of execution of at least one note is not the only attribute that could be altered in the plurality of versions of an audio track. In other implementation examples, the plurality of versions of the audio track may correspond to different versions of the same audio track but each version having a certain attribute/parameter that differs. Each of the plurality of versions of the audio track could have a differing value of the adjustable attribute/parameter. The attribute/parameter may relate to an audibly detectable parameter. For example, the attribute/parameter may relate to, at least for example:
a low pass filter cut off/resonance/gain
a band pass filter cut off/resonance/gain
pulse width modulation
modulation
pitch, increasing or decreasing pitch
gain
distortion level/mix
bit depth

Figure 4 schematically illustrates a lookup table 400 showing a plurality of volume levels Vₙ, a plurality of respective versions Nₙ of an audio track N and also a plurality of respective manners of execution ₙ.

The plurality of audio track versions Nₙ may comprise a plurality of audio recordings of the same audio track/at least one note N being played in a plurality of different manners ₙ. For example the at least one note could be performed and recorded at varying degrees of hardness, attack or velocity, e.g. having different note velocities. Also the at least one note may be performed at and recorded at a particular volume Vₓ related to an intended playback volume Vₓ. The plurality of audio track versions Nₙ could comprise a plurality of synthesised audio files representing the same at least one note N being played in a plurality of different manners ₙ.

Each of the plurality of audio track versions Nₙ is associated with a particular manner of execution ₙ. For example, audio track version N₄ corresponds to a recording/representation of a performance of the note N having a mezzo piano dynamic characteristic, which corresponds to a MIDI value of note velocity of 64.

Each audio output volume level Vₙ is associated with a version of the audio track Nₙ having a particular manner of execution ₙ. Each audio output volume level Vₙ is associated with a particular audio track version. The lookup table of Figure 4 shows a mapping of: volumes to audio track versions, volumes to manners of execution, and audio track versions to manners of execution. With such a lookup table, having determined a current volume level, e.g.V₆, one can determine: an associated audio track version N₆, an associated manner of execution ₙ₌₆ (forte) and an associated note velocity. Accordingly, the lookup table can be used to determine a particular manner of execution ₓ of at least one note in dependence on a determined volume level Vₓ and select one Nₓ of the plurality of audio track versions Nₙ which has a manner of execution ₓ corresponding to the determined manner of execution ₓ. Likewise, the lookup table can be used to select one Nₓ of the plurality of audio track versions Nₙ which is associated with a determined volume level Vₓ.

It will be appreciated that whilst a volume range of 1-8 has been shown, any size of volume range could be selected. For example, where the maximum volume level goes from 1 to 30, there could be 30 audio track versions, where each audio track version Nₓ has a note velocity having an integer value of (x/30)×127.

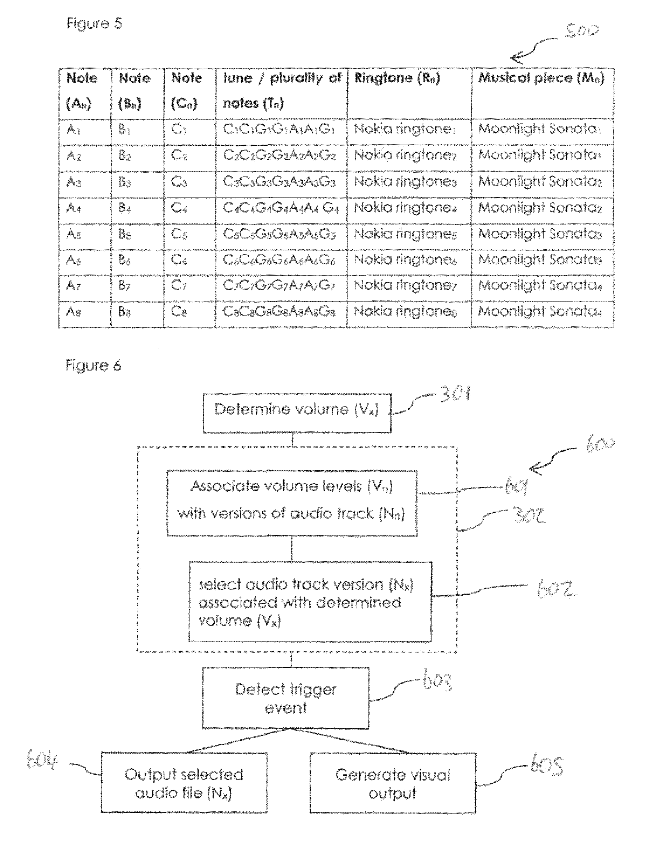

Figure 5 schematically illustrates a database 500 of audio track versions Nₙ. Each audio track version represents the same at least one note N but played in a different manner of execution ₙ. The at least one note may comprise: a plurality of notes, a tune, a melody, a score, a piece of music, a song, an audio track, a ring tone and musical content.

The database of Figure 5 acts as a sound bank, serving as a repository for the various audio track versions of the same at least one note recorded at different note velocities, one of which is selected based on a determined volume.

The database 500 comprises:
a plurality of recordings An of the same note A played with varying degrees of hardness ₙ,
a plurality of recordings Bₙ of the same note B played with varying degrees of hardness ₙ,
a plurality of recordings Cₙ of the same note C played with varying degrees of hardness ₙ,
a plurality of recordings Tₙ of the same tune/plurality of notes, wherein all of the notes are played with varying degrees of hardness ₙ,
a plurality of recordings Rₙ of the same ringtone, wherein the notes of the ringtone are played with varying degrees of hardness ₙ.
a plurality of recordings Mₙ of the same musical piece wherein the notes of the piece are played with varying degrees of hardness ₙ.

In some embodiments, there could be a 1:1 ratio of the number of different versions of the audio track as compared to the number of volume levels, e.g. V₁₋₈: A₁₋₈, B₁₋₈, C₁₋₈, T₁₋₈ and R₁₋₈. However, this is not necessarily the case. There could be fewer versions of the audio track than numbers of volume levels, e.g. 4 versions of the Musical piece M₁₋₄. Here, each version of the musical piece is associated with more than one volume level, i.e. a range of volume levels.

Figure 6 schematically illustrates a further method 600. In block 301 a volume level Vₓ of an audio output is determined. In block 302 a version Nₓ of an audio track N is selected from a plurality of versions Nₙ of the audio track N in dependence on the determined volume level Vₓ. Blocks 601 and 602 provide further details as to the selection in block 602.

In block 601 one or more volume levels Vₙ are associated with one or more audio track versions Nₙ. In block 602, an audio track version Nₓ is selected that is associated with the determined volume level Vₓ. This can be ascertained, for example, from the lookup table of Figure 4 which sets out the mapping/associations between volume levels and audio track versions.

In block 603 a triggering event is detected. This may correspond to detection of an incoming call, received message, notification, prompt, alert, warning, user selection or any other event that prompts/necessitates an audio output, namely of the selected version of the audio track. In block 604 the selected audio track version Nₓ is outputted in response to the detection of the triggering event. Optionally, in block 605, a visual output, e.g. message, image, video or other display of information, may be generated for display in response to detection of the triggering event. For example, where the triggering event is an incoming phone call and the audio track is a ringtone, the detection of the incoming phone call could trigger the audio output of the ringtone selected in the manner described above and the display of an image of the person calling.

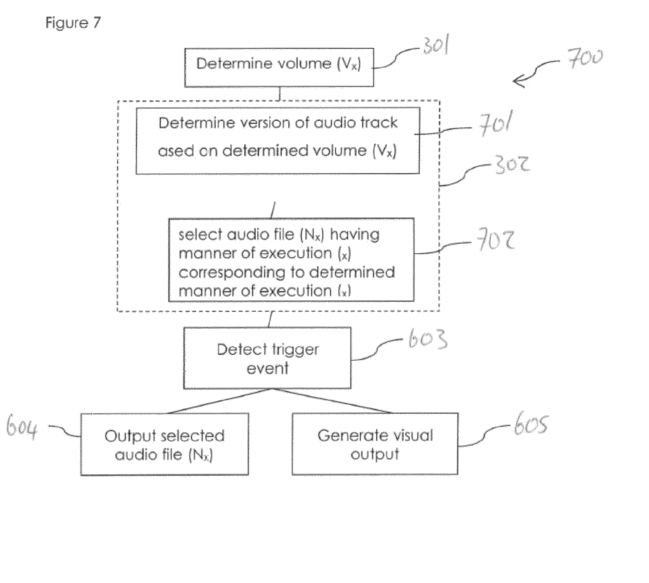

Figure 7 schematically illustrates a further method 700. In block 301 a volume level Vₓ of an audio output is determined. In block 302 an audio track version Nₓ is selected from a plurality of audio track versions Nₙ in dependence on the determined volume level Vₓ. Blocks 701 and 702 provide further details as to the selection in block 302.

In block 701 one ₓ of a plurality of manners of execution ₙ of at least one note N is determined in dependence on the determined volume level Vₓ. In block 702, an audio track version Nₓ is selected from a plurality of audio track versions Nₙ having a manner of execution ₓ of the at least one note N that corresponds to the determined manner of execution ₓ. This can be achieved, for example, via use of the lookup table 400 of Figure 4. Blocks 603, 604 and 605 correspond to those of Figure 6.

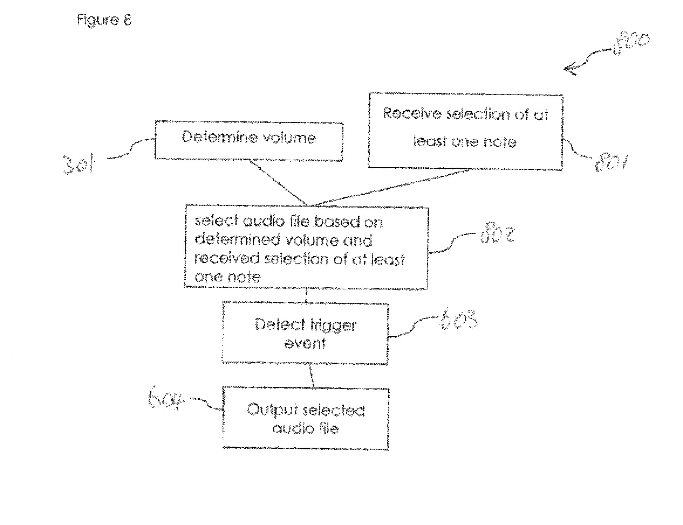

Figure 8 schematically illustrates a yet further method 800. In block 301 a volume level Vₓ of an audio output is determined. In block 801 a selection of at least one note N is received. In block 802 the selection of an audio track version from a plurality of audio track versions is based not only on the determined volume but also on the received selection of the at least one note. For example, a user may request a specific at least one note, e.g. any one of A, B, C, T, R and M from the database 500 of Figure 5, i.e. the user can select the 'music content' and the appropriate version of the music content is then selected in dependence on the determined volume as discussed above. For example, the user might select the 'Nokia Ringtone' tune as a ringtone. The selection of an audio track version from a plurality of audio track versions thus corresponds to a selection of one version of the Nokia Ringtone from a plurality of versions of the Nokia Ringtone based on the determined volume. Blocks 603 and 604 correspond to the equivalent blocks in Figure 6.

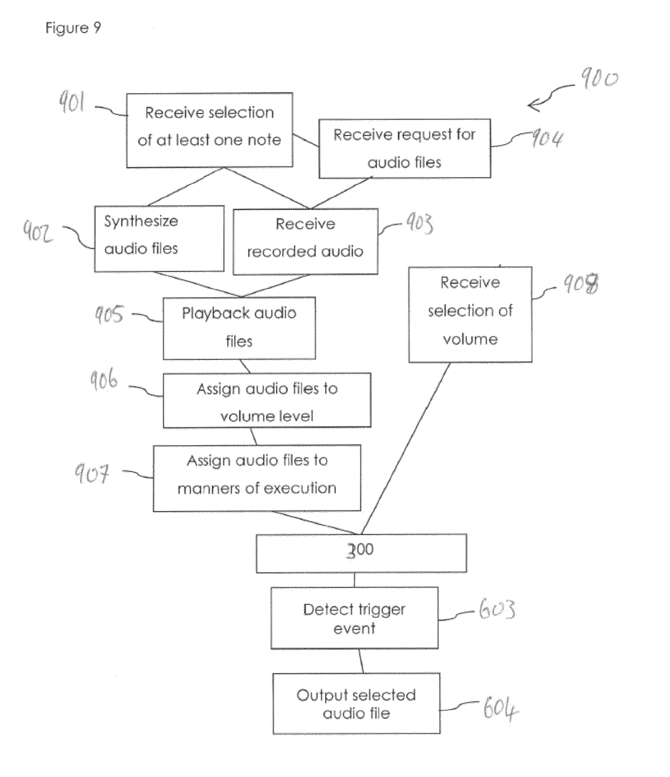

Figure 9 schematically illustrates a flowchart of a yet further method 900 indicating/including various additional processes that could be effected.

In block 901 at least one note may be selected. The various versions of the at least one note may be synthesised, block 902, or may be locally stored on an audio output device as recorded audio files, block 903. If various versions of the selected at least one note are not locally stored/readily available, they may be requested in block 904 e.g. from a remote server which can distribute the various versions of the same at least one note, each version relating to a differing manner of execution of the at least one note.

In block 905, the audio track, and multiple versions thereof, may be played back at the user's command, e.g. conventional playback, as opposed to output in response to a triggering event.

In block 906, at least one of the plurality of audio track versions may be assigned to at least one volume level. In block 907, at least one of the plurality of audio track versions may be assigned to at least one manner of execution. In effect, blocks 906 and 907 enable the user customisation of the lookup table 400 of figure 4 and customise the various mappings of volume levels, audio track versions and manners of execution.

In block 908 the volume level may be user selected.

The implementation of the above mentioned various processes 901-908 may involve generating a graphical user interface that is configured to enable a user to effect the various processes.

The flowchart of Figure 9 represents one possible scenario among others. The illustration of a particular order to the blocks does not necessarily imply that there is a required or preferred order for the blocks and the order and arrangement of the blocks may be varied. Furthermore, it may be possible for some steps to be omitted. The order of the blocks shown is not absolutely required, so, in principle, the various blocks can be performed out of order. Not all the blocks are essential. In certain examples one or more blocks may be performed in a different order or overlapping in time, in series or in parallel. One or more blocks may be omitted or added or changed in some combination of ways.

The method 900 also comprises the method 300 as per Figure 3 and the blocks 603 and 604 as per Figure 6.

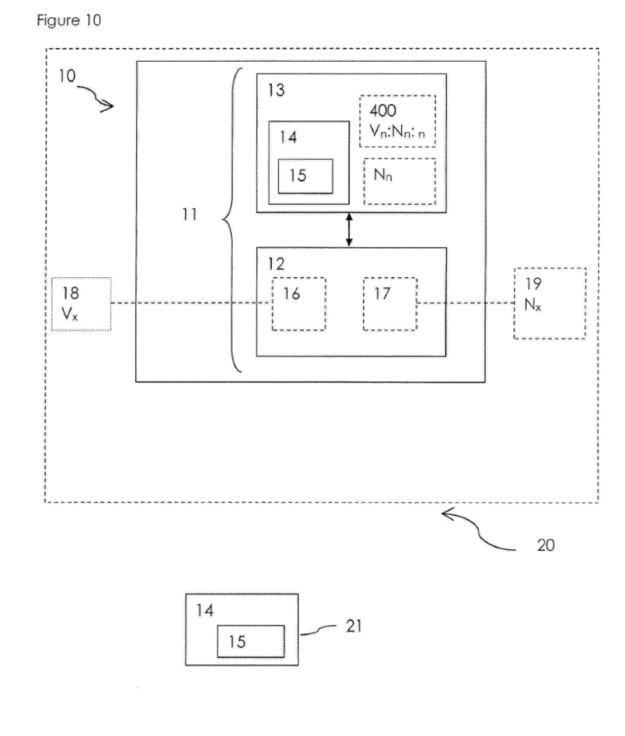

The blocks illustrated in Figures 1A-B, 2A-B, 3, 6, 7, 8 and 9 may represent steps in a method and/or sections of instructions/code in a computer program 14 (see Figure 10).

Figure 10 schematically illustrates an apparatus 10. Figure 10 focuses on the functional components necessary for describing the operation of the apparatus.

The apparatus 10 comprises a controller 11. Implementation of the controller can be in hardware alone (e.g. controller circuitry or processing circuitry comprising one or more processors and memory circuitry comprising one or more memory elements), have certain aspects in software including firmware alone or can be a combination of hardware and software (including firmware). The controller may be implemented using instructions that enable hardware functionality, for example, by using executable computer program instructions in a general-purpose or special-purpose processor that may be stored on a computer readable storage medium (disk, memory etc.) or carried by a signal carrier to be performed by such a processor.

In the illustrated example, the apparatus 10 comprises a controller 11 which is provided by a processor 12 and memory 13. Although a single processor and a single memory are illustrated in other implementations there may be multiple processors (or a multi-core processor) and/or there may be multiple memories some or all of which may be integrated/removable and/or may provide permanent/semi-permanent/dynamic/cached storage.

The memory 13 stores a computer program 14 comprising computer program instructions 15 that control the operation of the apparatus 10 when loaded into the processor 12. The processor 12 by reading the memory 13 is able to load and execute the computer program 14. The computer program instructions 15 of the computer program 14 provide the logic and routines that enable the apparatus to perform the methods as described above and with respect to figures 1A-B, 2A-B, 3, 6, 7, 8 and 9.

The at least one memory 13 and the computer program instructions 15 are configured to, with the at least one processor 12, cause the apparatus 10 at least to perform the methods as described above and with respect to figures 1A-B, 2A-B, 3, 6, 7, 8 and 9.

The processor 12 is configured to read from and write to the memory 13. The processor 12 may also comprise an input interface 16 via which data (e.g. a determined volume Vₓ from a volume determining means, mechanism or device 18) and/or commands are input to the processor 12 and an output interface 17 via which data (e.g. a selected audio track version Nₓ) and/or commands are output by the processor 12, e.g. for audio output from an audio output means, mechanism or device such as a speaker 19.

The memory 13 may store a lookup table/database 400 associating various volume levels Vₙ and manners of execution ₙ (the lookup table may be comprised in the computer program 14). The memory 13 may also store a plurality of audio track versions Nₙ. Alternatively the plurality of audio track versions Nₙ may be stored in another memory element of the apparatus, or the plurality of audio track versions Nₙ may be made available to the apparatus for selection, i.e. via receipt from a remote server or by being generated/synthesised in an audio synthesis engine, such as a virtual instrument or Virtual Studio Technology.

The computer program 14, audio track versions Nₙ and lookup table 400 may arrive at the apparatus 10 via any suitable delivery mechanism. The delivery mechanism may be, for example, a non-transitory computer-readable storage medium 21, a computer program product, a memory device, a record medium such as a compact disc read-only memory or digital versatile disc, an article of manufacture that tangibly embodies the computer program. The delivery mechanism may be a signal configured to reliably transfer the computer program 14.

The apparatus 10 may output at least one of: a signal indicating the selected audio track version, a reference to the selected audio track version, the selected audio track version itself or an audio output of the selected audio track version.

The apparatus 10 may, for example, be: a chipset, a module (e.g. comprising the chipset and at least one additional element, for example an audio output device/speaker), a device 20 (e.g. comprising the chipset or module and at least one additional element, for example a display or user input interface).

The apparatus may further be configured for at least one of:
audio output;
portable handheld use;
wireless communication; and
mobile telephony.

Although an example of the apparatus has been described above in terms of comprising various components, it should be understood that the components may be embodied as or otherwise controlled by a corresponding processing element or processor of the apparatus. In this regard, each of the components described above may be one or more of any device, means or circuitry embodied in hardware, software or a combination of hardware and software that is configured to perform the corresponding functions of the respective components as in the methods described and with regards to at least Figures 1A-B, 2A-B, 3, 6, 7, 8 and 9. References to 'computer-readable storage medium', 'computer program product', 'tangibly embodied computer program' etc. or a 'controller', 'computer', 'processor' etc. should be understood to encompass not only computers having different architectures such as single-/multi-processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) combinations of circuits and software (and/or firmware), such as (as applicable): (i) a combination of processor(s) or (ii) portions of processor(s)/software (including digital signal processor(s)), software, and memory(ies) that work together to cause an apparatus, such as a mobile phone or server, to perform various functions) and
(c) circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device."

In some but not necessarily all implementation examples, the apparatus 10 is embodied on a hand held portable electronic device 20, such as a mobile telephone or personal digital assistant, that may additionally provide one or more audio/text/video communication functions (e.g. telecommunication, video-communication, and/or text transmission (Short Message Service (SMS)/Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other formats and/or (frequency modulation/amplitude modulation) radio broadcast recording/playing), downloading/sending of data functions, image capture function (e.g. using a (e.g. in-built) digital camera), and gaming functions.

Examples of the present invention provide both a method and corresponding apparatus consisting of various modules or means that provide the functionality for performing the steps of the method. The modules or means may be implemented as hardware, or may be implemented as software or firmware to be performed by a computer processor. In particular, in the case of firmware or software, examples of the invention can be provided as a computer program product including a computer readable storage structure embodying computer program instructions (i.e. the software or firmware) thereon for performing by the computer processor.

The apparatus may be provided in a module. As used here 'module' refers to a unit or apparatus that excludes certain parts/components that would be added by an end manufacturer or a user.

It will be understood that each block and combinations of blocks, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory storage device and performed by a processor. As will be appreciated, any such computer program instructions may be loaded onto a computer or other programmable apparatus (i.e., hardware) to produce a machine, such that the instructions which are performed on the programmable apparatus create means for implementing the functions specified in the blocks. These computer program instructions may also be stored in a computer-readable medium that can direct a programmable apparatus to function in a particular manner, such that the instructions stored in the computer-readable memory produce an article of manufacture including instruction means which implement the function specified in the blocks. The computer program instructions may also be loaded onto a programmable apparatus to cause a series of operational steps to be performed on the programmable apparatus to produce a computer-implemented process such that the instructions which are performed on the programmable apparatus provide steps for implementing the functions specified in the blocks.

Features described in the preceding description may be used in combinations other than the combinations explicitly described. Although functions have been described with reference to certain features, those functions may be performable by other features whether described or not. Although features have been described with reference to certain examples, those features may also be present in other examples whether described or not.

Although various examples of the present invention have been described in the preceding paragraphs with reference to various examples, it should be appreciated that modifications to the examples given can be made without departing from the scope of the invention as claimed.

In this description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class.

The term 'comprise' is used in this document with an inclusive not an exclusive meaning. That is any reference to X comprising Y indicates that X may comprise only one X or may comprise more than one X. If it is intended to use 'comprise' with an exclusive meaning then it will be made clear in the context by referring to "comprising only one" or by using "consisting".

Whilst endeavouring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

In the above description, the apparatus described may alternatively or in addition comprise apparatus which in some other embodiments comprises a distributed system of apparatus, for example, a client/server apparatus system. In examples of embodiments where an apparatus provided forms (or a method is implemented as) a distributed system, each apparatus forming a component and/or part of the system provides (or implements) one or more features which collectively implement an embodiment of the invention. In some examples of embodiments, an apparatus is re-configured by an entity other than its initial manufacturer to implement an embodiment of the invention by being provided with additional software, for example by a user downloading such software, which when executed causes the apparatus to implement an example of an embodiment of the invention (such implementation being either entirely by the apparatus or as part of a system of apparatus as mentioned hereinabove).

The above description describes some examples of embodiments of an invention however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the embodiments of the invention.

## Claims

1. A method comprising causing, at least in part, actions that result in:
determining a volume level of an audio output; and
selecting a version of an audio track from a plurality of versions of the audio track in dependence on the determined volume level.

2. The method of claim 1, wherein each of the plurality of versions of the audio track is associated with an audio track identifier and wherein each of the plurality of versions of the audio track is associated with the same audio track identifier.

3. The method of any one or more of the previous claims, wherein the audio track comprises at least one note and wherein each of the plurality of versions of the audio track represents the same at least one note but played in a different manner of execution.

4. The method of claim 3, wherein the manner of execution of the at least one note relates to at least one of:
a dynamic aspect of the execution of the at least one note;
how hard or softly the at least one note is performed;
how fast or slowly the at least one note is performed;
a note velocity of the at least one note; and
a stylistic aspect of the manner of execution of the at least one note.

5. The method of any one or more of the previous claims, wherein:
the plurality of versions of the audio track comprises a plurality of audio recordings of the same at least one note being played in a plurality of different manners of execution; or
the plurality of versions of the audio track comprises a plurality of synthesised audio files representing the same at least one note being played in a plurality of different manners.

6. The method of any one or more of the previous claims, further comprising causing, at least in part, actions that result in:
associating one or more volume levels with one or more of the plurality of versions of the audio track; and
wherein selecting the audio track version comprises selecting an audio track version associated with the determined volume level.

7. The method of claim 6, further comprising causing, at least in part, actions that result in:
storing the association of one or more volume levels with one or more of the plurality of versions of the audio track.

8. The method of any one or more of the previous claims, further comprising causing, at least in part, actions that result in:
determining, for each of the one or more of the plurality of versions of the audio track, one or more audio characteristics which differ between each audio track version;
associating one or more volume levels with the determined one or more audio characteristics.

9. The method of any one or more of the previous claims, further comprising causing, at least in part, actions that result in:
modifying one or more audio characteristics of the selected audio track version in dependence on the determined volume level.

10. The method of any one or more of the previous claims wherein the audio track comprises at least one of:
at least one note, a plurality of notes, a tune, a melody, a score, a piece of music, a song, an audio track, a ring tone and musical content.

11. The method of any one or more of the previous claims, further comprising causing, at least in part, actions that result in:
outputting the selected audio track.

12. The method of claim 11, further comprising causing, at least in part, actions that result in:
detecting a triggering event, and wherein outputting the selected audio track is responsive to detection of the triggering event.

13. The method of previous claim 12, further comprising causing, at least in part, actions that result in:
generating a visual output responsive to detection of the triggering event.

14. The method of any one or more of the previous claims, further comprising causing, at least in part, actions that result in: receiving a selection of an audio track identifier; and
wherein the selecting of the audio track version is further dependent upon the received selection of the audio track identifier.

15. The method of any one or more of the previous claims, further comprising causing, at least in part, actions that result in providing a user interface for enabling a user to:
select the volume level;
select an audio track identifier;
assign at least one of the plurality of versions of the audio track to at least one volume level;
assign at least one of the plurality of versions of the audio track to at least one manner of execution;
play back at least one of the plurality of versions of the audio track; and
request at least one of the plurality of versions of the audio track.

16. The method of any one or more of the previous claims, wherein the audio track has an adjustable parameter and wherein each of the plurality of versions of the audio track has a differing value of the adjustable parameter.

17. An apparatus comprising means configured to enable the apparatus at least to perform the method as claimed in one or more of the previous method claims 1 to 16.

18. A computer program that, when performed by at least one processor, causes the method as claimed in any one or more of method claims 1 to 16 to be performed.
